# EUROPÄISCHE PATENTSCHRIFT

(11) **EP 2 787 485 B1**
(45) Veröffentlichungstag und Bekanntmachung des Hinweises auf die Patenterteilung: **14.12.2016**
(21) Anmeldenummer: 14001133.9
(22) Anmeldetag: 27.03.2014
(51) Int. Cl.: G06T 7/00, G06T 7/40

(54) **Verfahren und Vorrichtung zur automatischen Fehlerstellenerkennung bei biegeschlaffen Körpern**
Method and device for automatic detection of defects in flexible bodies
Procédé et dispositif de détection automatique d'erreurs dans des corps flexibles

(30) Priorität: 02.04.2013 DE 102013005489
(43) Veröffentlichungstag der Anmeldung: 08.10.2014
(73) Patentinhaber: Capex Invest GmbH, 33607 Bielefeld (DE)
(72) Erfinder: Bruder, Manuel, 33605 Bielefeld (DE)
(74) Vertreter: Roche, von Westernhagen & Ehresmann

(56) Entgegenhaltungen:
- Hemerson Pistori ET AL: "Defect Detection in Raw Hide and Wet Blue Leather", , 1. Januar 2006 (2006-01-01), Seiten 1-6, XP055133529, Gefunden im Internet: URL:http://www.gpec.ucdb.br/pistori/public acoes/pistori_compimage2006leather.pdf [gefunden am 2014-08-06]
- ODEMIR S ET AL: "Comparative evaluation of texture analysis algorithms for defect inspection of textile products", PATTERN RECOGNITION, 1998. PROCEEDINGS. FOURTEENTH INTERNATIONAL CONFE RENCE ON BRISBANE, QLD., AUSTRALIA 16-20 AUG. 1998, LOS ALAMITOS, CA, USA,IEEE COMPUT. SOC, US, Bd. 2, 16. August 1998 (1998-08-16), Seiten 1738-1740, XP010297822, DOI: 10.1109/ICPR.1998.712061 ISBN: 978-0-8186-8512-5
- HENRY Y T NGAN ET AL: "Automated fabric defect detection A review", IMAGE AND VISION COMPUTING, ELSEVIER, GUILDFORD, GB, Bd. 29, Nr. 7, 27. Februar 2011 (2011-02-27), Seiten 442-458, XP028095511, ISSN: 0262-8856, DOI: 10.1016/J.IMAVIS.2011.02.002 [gefunden am 2011-03-24]
- TSAI I-S ET AL: "APPLYING AN ARTIFICAL NEURAL NETWORK TO PATTERN RECOGNITION IN FABRIC DEFECTS", TEXTILE RESEARCH JOURNAL, SAGE PUBLICATIONS, LONDON, GB, Bd. 65, Nr. 3, 1. März 1995 (1995-03-01), Seiten 123-130, XP000644609, ISSN: 0040-5175
- ROBERT M HARALICK ET AL: "Textural Features for Image Classification", IEEE TRANSACTIONS ON SYSTEMS, MAN AND CYBERNETICS, IEEE INC. NEW YORK, US, Bd. 3, Nr. 6, 1. November 1973 (1973-11-01), Seiten 610-621, XP011192771, ISSN: 0018-9472, DOI: 10.1109/TSMC.1973.4309314
- ASADOLLAH SHAHBAHRAMI ET AL: "Parallel implementation of Gray Level Co-occurrence Matrices and Haralick texture features on cell architecture", THE JOURNAL OF SUPERCOMPUTING, KLUWER ACADEMIC PUBLISHERS, BO, Bd. 59, Nr. 3, 2. Februar 2011 (2011-02-02), Seiten 1455-1477, XP035005148, ISSN: 1573-0484, DOI: 10.1007/S11227-011-0556-X
- Hoang K. et al.: "Image processing techniques for leather hide ranking in the footwear industry", Machine Vision and Applications, 1. Januar 1996 (1996-01-01), Seiten 119-129, XP055133525, Gefunden im Internet: URL:http://rd.springer.com/content/pdf/10. 1007/BF01216817.pdf [gefunden am 2014-08-06]

## Beschreibung

Die Erfindung betrifft zunächst ein Verfahren zur automatischen Fehlerstellenerkennung bei biegeschlaffen Körpern, nämlich insbesondere bei Tier- oder Lederhäuten.

So werden aus Lederhäuten maschinell Bearbeitungsstücke herausgeschnitten, welche dann typischerweise im Möbelpolster- oder Kfz-Sitzbereich Verwendung finden.

Die Tierhäute weisen vor dem Schneidevorgang naturgemäß Fehlerstellen oder Fehlerbereiche auf, welche beispielsweise durch Narben, Insektenstiche, Löcher, Falten oder ähnliches hervorgerufen werden können. Diese Fehlerstellen müssen erkannt bzw. markiert werden, so dass während des anschließenden Schneidprozesses um diese ungewünschten Fehlerstellen herumgeschnitten werden kann. Hierdurch liegen die Fehlerstellen dann nicht im Bereich der weiterzuverarbeitenden Verarbeitungsstücke.

Aus dem Stand der Technik ist es hinlänglich bekannt, derartige Fehlerstellen manuell zu erkennen und dann mit Hilfsmitteln zu markieren. So werden beispielsweise gemäß der DE 35 21 357 A1 Fehler oder Löcher an Ihren Kanten manuell mit Aufheller gekennzeichnet, so dass eine Aufnahmeeinrichtung die Lage der Fehler dann aufgrund des Aufhellers automatisch erkennt. Eine ähnliche manuelle Markierung, jedoch mit Hilfe spezieller Kugeln, ist desweiteren aus der DE 42 31 222 C1 bekannt.

Ein weiteres druckschriftlich nicht belegbares manuelles Verfahren besteht desweiteren darin, die Haut zunächst zu fotografieren und dann manuell an einem Bildschirm, welcher eine Abbildung der fotografierten Haut wiedergibt, per Maus mit Markierungen zu versehen. Ein sogenanntes Nesting-Programm kann die Schnittmuster unter Berücksichtigung der angegebenen Fehlerstellen so auf der Haut plazieren, dass die Fehlerstellen nicht in den zu schneidenden Mustern liegen.

Auch wenn derartige manuelle Erkennungs- und Markierungsverfahren grundsätzlich zuverlässig sind, ist es ein Bestreben der Fachwelt die Fehlerkennung automatisch bzw. automatisiert durchzuführen.

Aus dem Stand der Technik sind daher auch Versuche bekannt, Fehlerstellen bei biegeschlaffen Körpern, insbesondere bei Tierhäuten, automatisch zu detektieren. Derartige Verfahren umfassen jeweils zuerst die Digitalisierung der Tierhaut, wobei üblicherweise eine Aufnahme der gesamten Tierhaut erstellt wird.

Eine solche automatische Erkennung erfolgt im Stand der Technik beispielsweise nach sogenannten Diskontinuitätskriterien. Dieses Verfahren wird im Stand der Technik größtenteils dazu benutzt, den Rand einer Tierhaut zu detektieren, da auch eine diesbezügliche automatische Erkennung für eine spätere Bearbeitung von Vorteil ist.

Hierbei wird die Tierhaut als Ganzes von einer Kamera aufgenommen und dann hinsichtlich der Helligkeits- oder Graustufenwerte ausgewertet. Es wird davon ausgegangen, dass im Bereich des Randes der Tierhaut große Unterschiede der Helligkeit bzw. der Graustufen bestehen, wobei diese großen Unterschiede insbesondere als Extrema in einer mathematischen (partiellen) Ableitung einer Grauwert-Matrix erkennbar sind. Diese Auswertung nach Diskontinuitätskriterien, welche für die Tierhautränder üblicherweise ohne Probleme funktioniert, wird im Stand der Technik teilweise auch zur Fehlerstellenerkennung innerhalb einer Tierhaut genutzt, wobei davon ausgegangen wird, dass der Rand einer Fehlerstelle im Vergleich zu dem die Stelle umgebenden, unversehrten Material einen großen Graustufen- oder Helligkeitssprung aufweist. In der Theorie soll dann anhand der erkannten Ränder der Fehlerstelle (also deren erkanntem Umriss) eine Klassifizierung bzw. Qualifizierung der Fehlerstelle erfolgen können.

In der Praxis hat sich dieses für die Erkennung von Tierhauträndern sehr geeignete Verfahren jedoch als zur Erkennung von Fehlerstellen im Material nicht optimal erwiesen, da nur gering kontrastreiche Fehlerstellen, wie zum Beispiel Narben oder Insektenstiche, nicht verlässlich erkannt werden.

Ein weiteres Verfahren zur automatischen Fehlerstellenerkennung stellt die Berechnung nach sogenannten Homogenitätskriterien dar, wobei ein solches Verfahren auch als Schwellwertverfahren bezeichnet wird. Im Gegensatz zu einer Segmentierung nach Diskontinuitätskriterien unterscheidet man hier nach dem Inhalt des Segmentes und nicht anhand der Grenzen des Segments. So wird für die Helligkeitsverteilung der Graustufenwerte des analysierten Bildes ein Histogramm erstellt, um hieraus einen Schwellwert zu ermitteln.

Das Eingangsbild wird dann in einen Teil mit höheren Grauwerten als der Schwellwert und einen Teil mit darunter liegenden Grauwerten aufgeteilt, so dass ein Binärbild entsteht, welchem der Theorie nach optisch die Fehlerstellen entnehmbar sein sollten. In der Praxis zeigt sich jedoch, dass den Histogrammen die Entnahme eines Schwellwertes oft nicht möglich ist. Ein ähnliches Verfahren scheint offensichtlich in der DE 198 24 304 A1 Verwendung zu finden, bei welcher Veränderungen eines Grau- oder Farbwertes in einem Lederstück, bezogen auf den gesamten Grau- oder Farbwert erfasst werden und beispielsweise bezüglich ihrer Größe oder ihrer Häufigkeit in dem Lederstück ausgewertet werden. Folgende Fehlerdaten werden gemäß diesem Stand der Technik mit Fehlerdaten aus einem Referenzwertspeicher verglichen. Allerdings erweisen sich derartige Referenzwertspeicher oft als nicht zuverlässig und dieses Verfahren, insbesondere für Tierhäute, als nicht geeignet und unzuverlässig bei der Fehlerstellenerkennung.

Aus der Druckschrift Defect Detection in Raw Hide and Wet Blue Leather, Hemerson Pistori et al., Compimage, 20-21 October 2006, Computational modelling of Objects represented in Images, Fundamentals, Methods and Applications ist ein Ansatz zur Fehlstellenerkennung in Leder bekannt.

Zusammenfassend sind die bekannten manuellen Verfahren zur Fehlerstellenerkennung zu umständlich, die bekannten automatischen Verfahren zu unzuverlässig.

Die Aufgabe der vorliegenden Erfindung besteht demnach darin, ein Verfahren bereitzustellen, welches eine automatische Fehlerstellenerkennung bei verbesserter Zuverlässigkeit ermöglicht.

Die vorliegende Erfindung löst die gestellte Aufgabe mit den Merkmalen des Patentanspruches 1.

Die Erfindung besteht demnach im Wesentlichen darin, die Aufnahme eines biegeschlaffen Körpers bzw. einer Tierhaut in eine Vielzahl kleiner Fenster bzw. Unterbilder zu zerlegen und diese Unterbilder dann jeweils einer stochastischen Analyse zu unterziehen. Bei dieser Analyse kann es sich um eine stochastische Analyse zweiter, dritter, vierter, fünfter, sechster Ordnung oder auch einer höheren Ordnung handeln.

Während die stochastische Analyse erster Ordnung ein Bild bzw. einen Bildausschnitt als eine Menge von Pixeln auffasst und dessen Histogramm betrachtet (so dass anhand der ermittelten Häufigkeit der Grau- bzw. Farbwerte die Berechnung eines einfachen Texturmaßes wie Mittelwert oder Varianz erfolgen kann), geht die stochastische Texturanalyse höherer Ordnung weiter, indem berücksichtigt wird, an welcher Stelle im Bild sich ein jeweiliges Pixel befindet.

Zwei unterschiedliche Bildausschnitte, die eine identische Grauwertverteilung (identische Histogramme) aufweisen, sind mit Mitteln der stochastischen Analyse erster Ordnung nicht unterscheidbar, jedoch mit Mitteln der stochastischen Analyse höherer Ordnung. Diese basiert auf der Modellierung räumlicher Zusammenhänge durch die Auftrittswahrscheinlichkeit von Grauwert- oder Farbwertkombinationen.

In diesem Sinne werden nach dem vorliegenden Hauptanspruch Nachbarschaftsbeziehungen der einzelnen Bildpunkte eines Unterbildes berücksichtigt. Demnach wird jeweils ein einziges Unterbild für sich analysiert und die darin enthaltenen Pixel hinsichtlich ihrer Beziehung untereinander ausgewertet. Eine solche Auswertung ist beispielsweise durch die Erstellung einer später noch näher beschriebenen Auftrittswahrscheinlichkeits-Matrix für ein Unterbild und der Analyse der stochastischen Parameter dieser Matrix möglich.

Nachdem das Unterbild auf diese Weise ausgewertet wurde und ein charakteristischer Vergleichswert vorliegt, kann dieser Vergleichswert dann mit den Vergleichswerten der anderen Unterbilder verglichen werden.

Die Analyse der Unterbilder basiert auf einer Aufnahme des biegeschlaffen Körpers, wobei es sich bei dem biegeschlaffen Körper insbesondere um eine Tierhaut bzw. um eine Lederhaut handeln kann. Grundsätzlich können jedoch auch andere biegeschlaffe Körper mit dem erfindungsgemäßen Verfahren analysiert werden, beispielsweise Kohlefasermatten, Glasfasermatten oder ähnliches.

Hierzu wird eine Aufnahme des biegeschlaffen Körpers erstellt. Dieser wird somit hinsichtlich seiner Form und Oberflächenbeschaffenheit digitalisiert. Entsprechende, hierzu vorgesehene Vorrichtungen weisen üblicherweise eine CCD-Kamera oder eine andere elektronische Aufnahmevorrichtung auf. Die Vorrichtung kann aber auch mehrere CCD-Kameras, wie beispielsweise 3 nebeneinander angeordnete CCD-Kameras oder andere Aufnahmevorrichtungen aufweisen.

Bei einer solchen Kamera kann es sich insbesondere auch um eine Zeilenkamera handeln, bei welcher bevorzugt der biegeschlaffe Körper unter der Kamera vorbeigeführt wird.

Die Kameras können dann jeweils einen unterschiedlichen Abschnitt des zu analysierenden biegeschlaffen Körpers aufnehmen. Insbesondere kann die hierzu vorgesehene Aufnahmeeinrichtung relativ zu dem biegeschlaffen Körper verlagerbar sein. Vorteilhafterweise wird der biegeschlaffe Körper unter einer stationären Aufnahmeeinrichtung vorbeigeführt bzw. unter dieser hindurchgeführt. Alternativ ist es aber selbstverständlich auch möglich, dass die Aufnahmeeinrichtung verlagerbar ist und der biegeschlaffe Körper auf eine stationäre Auflagevorrichtung aufgelegt wird.

Die Aufnahmeeinrichtung kann im Rahmen einer einmaligen Aufnahme den ganzen biegeschlaffen Körper aufnehmen und somit digitalisieren. Es können aber auch mehrere Aufnahmen einzelner Abschnitte des biegeschlaffen Körpers getätigt werden, wobei diese Einzelaufnahmen dann von einer Recheneinheit zu einem Gesamtbild zusammengesetzt werden können. Entscheidend ist, dass erfindungsgemäß eine Aufnahme mindestens eines Abschnittes bzw. mindestens eines Teilbereichs des biegeschlaffen Körpers erfolgt, welche dann anschließend in Unterbilder bzw. Fenster zur weiteren Analyse unterteilt wird.

Die Aufnahmeeinrichtung kann hierzu beispielsweise Farbaufnahmen tätigen oder auch Grauwertaufnahmen. Insbesondere können Farbwerte vor einer weiteren Analyse auch in Graustufenwerte umgerechnet werden.

Nachdem mit dem erfindungsgemäßen Verfahren die Fehlerstellen eines biegeschlaffen Körpers hinreichend erkannt wurden (und gegebenenfalls sogar klassifiziert und qualifiziert werden konnten) können die zu den Fehlerstellen ermittelten Daten (wie beispielsweise Lage oder Größe oder Art der Fehlerstelle) in einer Datenbank oder in einer Recheneinheit zur späteren Verwendung gespeichert werden. Bei dieser weiteren Verwendung kann es sich beispielsweise um einen anschließenden, herkömmlichen Nesting-Prozess handeln, wobei eine Recheneinheit der Vorrichtung zur automatischen Fehlererstellenerkennung die auszuschneidenden Teile derart auf dem biegeschlaffen Körper platzieren kann, dass die Fehlerstellen dabei berücksichtigt werden. Anschließend kann der biegeschlaffe Körper dann gemäß den Ergebnissen dieses Nesting-Prozesses bearbeitet, insbesondere zurechtgeschnitten werden. Diese Bearbeitung kann vorzugsweise automatisch erfolgen, insbesondere auch mit der Vorrichtung zur automatischen Fehlerstellenerkennung. Hierbei kann die Vorrichtung zur automatischen Fehlerstellenerkennung neben der Aufnahmeeinrichtung beispielsweise auch eine Schneideinheit enthalten, welche mit der Steuerung oder Recheneinheit der Vorrichtung verbunden ist und von dieser steuerbar ist.

Mit dem Verfahren zur automatischen Fehlerstellenerkennung können neben typischen Fehlerstellen, wie beispielsweise Narben, Mastfalten, Flämen, Insektenstichen, Schmutzeinschlüssen, Kratzern, Warzen, Gerbfehlern, Aushebern, Rauhstellen, Adern, Brandmarken, Falten oder sonstigen unerwünschten Strukturen aber beispielsweise auch die Ränder des biegeschlaffen Körpers oder Löcher im biegeschlaffen Körper erkannt werden.

Durch die automatische Fehlerstellenerkennung wird es dabei überflüssig, den biegeschlaffen Körper vor der automatischen Analyse manuell bzw. händisch zu markieren. Fluoreszierende Farbe oder ähnliche Hilfsmittel sind daher verzichtbar.

Die Erfindung stellt dabei überraschenderweise fest, dass auf die manuellen Markierungen verzichtet werden kann, sofern bei der Analyse der einzelnen Unterbilder Nachbarschaftsbeziehungen der einzelnen Pixel eines Unterbildes untereinander Berücksichtigung finden.

Im Gegensatz zu einer Analyse einer gesamten Tierhaut nach Diskontinuitätskriterien, beispielsweise um den Rand zu erkennen, ist es mit dem vorliegenden erfindungsgemäßen Verfahren auch möglich, Fehlerstellen innerhalb der Haut mit geringeren Kontrastunterschieden als Löcher oder Randstellen zu erkennen.

Die stochastische Analyse höherer Ordnung ermöglicht neben einer grundsätzlichen Erkennung, dass innerhalb eines Unterbildes ein Fehler vorliegt, vorteilhafterweise sogar tiefergehende Informationen über die Art der Fehlerstelle und in diesem Sinne gegebenenfalls sogar eine Qualifizierung bzw. Klassifizierung der aufgefundenen Fehlerstelle.

Primär geht es jedoch zunächst um die grundsätzliche Erkennung des Vorhandenseins einer Fehlerstelle in einem Unterbild. Das Unterbild wird im Sinne des erfindungsgemäßen Verfahrens demnach zunächst als fehlerfreies oder fehlerhaftes Unterbild klassifiziert. Da das Unterbild üblicherweise lediglich eine geringe Pixelgröße aufweist, reicht die Markierung des Unterbildes als fehlerhaft zur grundsätzlichen Erkennung von Fehlerstellen aus. Lang strukturierte Fehlerstellen, wie beispielsweise

Narben, werden in einer grafischen Darstellung des gesamten biegeschlaffen Körpers bzw. des untersuchten Teilbereiches dann durch eine Struktur mehrerer als fehlerhaft markierter Unterbilder erkennbar.

Bei der automatischen Analyse wird gemäß der Erfindung pro Unterbild ein Vergleichswert ermittelt. Wie weiter unten noch ausgeführt wird, kann es sich bei diesem Vergleichswert beispielsweise um einen stochastischen Parameter handeln, der sich aus der Berechnung einer Auftrittswahrscheinlichkeits-Matrix dieses Unterbildes ergibt. Diese Matrix berücksichtigt Nachbarschaftsbeziehungen der einzelnen Pixel eines Unterbildes untereinander. Ein entsprechender Vergleichswert kann auf diese Weise für jedes Unterbild der Aufnahme berechnet werden, wozu insbesondere für jedes der Unterbilder dann eine separate Auftrittswahrscheinlichkeits-Matrix ermittelt wird.

Erfindungsgemäß wird der Vergleichswert eines Unterbildes mit einem vorgegebenen bzw. berechneten Schwellwert verglichen, so dass aufgrund dieses Vergleiches entschieden werden kann, ob das Unterbild eine Fehlerstelle aufweist bzw. als fehlerstellenhaltig klassifiziert wird. In diesem Sinne kann das Unterbild beispielsweise als fehlerstellenhaltig klassifiziert werden, sofern der Vergleichswert über dem Schwellwert liegt.

Hierbei ist es erfindungsgemäß vorgesehen, dass der Schwellwert auf der Basis der Vergleichswerte der Unterbilder ermittelt wird. In diesem Sinne werden zur Ermittlung eines Schwellwertes zunächst die Vergleichswerte für alle oder jedenfalls einen Großteil der Unterbilder gesammelt, wobei aus diesen Vergleichswerten sodann ein passender Schwellwert ermittelt wird. Insbesondere kann der Durchschnitt aller Vergleichswerte berechnet werden und der Schwellwert kann dann ein Vielfaches dieses Durchschnittswertes betragen. Sollte der Vergleichswert eines Unterbildes dann beispielsweise überhalb des Schwellwertes liegen, kann das Unterbild als fehlerstellenhaltig klassifiziert werden.

Als besonders vorteilhaft hat sich bei diesem Verfahren herausgestellt, dass nach einem einmaligen Durchlauf des soeben beschriebenen Verfahrens eine Rückkopplung erfolgt. Dies bedeutet, dass nachdem der eben beschriebene Schwellwert auf Basis der Vergleichswerte der Unterbilder ermittelt wurde (und auf diese Weise die Unterbilder ermittelt wurden, welche offensichtlich eine Fehlerstelle aufweisen) in einem weiteren Verfahrensschritt ein neuer Hilfsschwellwert ermittelt wird. Bei der Berechnung dieses Hilfsschwellenwertes werden die in dem ersten Verfahrensschritt als fehlerstellenhaft erkannten Unterbilder ignoriert. Der Hilfsschwellwert wird somit auf Basis der Vergleichswerte aller Unterbilder ermittelt, welche in dem ersten Verfahrensschritt als nicht fehlerstellenhaltig klassifiziert wurden.

Eine solche Rückkopplung erlaubt in der Aufnahme eine bessere Differenzierung von Fehlerstellen unterschiedlichen Kontrastes. So kann beispielsweise das Loch in einer Tierhaut einen sehr hohen Kontrast im Verhältnis zum Rest der Tierhaut aufweisen, während eine Narbe lediglich einen sehr geringen Kontrastwert aufweist. In einem ersten Analysedurchlauf oder Verfahrensschritt würde dann gegebenenfalls das Loch erkannt werden, nicht jedoch die Narbe, da die dem Loch zugeordneten Unterbilder einen derartig hohen Vergleichswert aufweisen, dass die im Vergleich dazu relativ geringen Vergleichswerte von Unterbildern, welche der Narbe zugeordnet sind, (fälschlicherweise) als nicht fehlerstellenhaltig eingeordnet würden. Werden die Unterbilder, welche dem Loch zugeordnet sind (und im ersten Verfahrensschritt als fehlerstellenhaltig erkannt wurden), in einem zweiten Verfahrensschritt jedoch ausgeblendet, so erweisen sich die Vergleichswerte der der Narbe zugeordneten Unterbilder als relativ hoch im Vergleich zu den Unterbildern, welche eine herkömmliche fehlerstellenfreie Struktur abbilden.

Mit anderen Worten können durch diese vorteilhafte Ausgestaltung des erfindungsgemäßen Verfahrens stufenweise immer feinere Fehlerstellen aufgefunden werden. Es kann in diesem Sinne auch vorgesehen sein, weitere Rückkopplungsschritte vorzusehen, wobei in einem nachfolgenden Rückkopplungsschritt immer die in einem vorigen Rückkopplungsschritt als fehlerstellenhaltig aufgefundenen Unterbilder unberücksichtigt bleiben.

Gemäß einer vorteilhaften Ausgestaltung der Erfindung wird zur automatischen Analyse der Unterbilder für jedes zu analysierende Unterbild einer Auftrittswahrscheinlichkeit-Matrix berechnet.

In einer Auftrittswahrscheinlichkeit-Matrix P_{Δα} wird die Häufigkeit, mit der eine Grauwertkombination p_{Δα} (g₁,g₂) auftritt, gespeichert. Die Lage der beiden Grauwerte ist dabei durch einen Winkel α und einen Abstand Δ fest definiert. Die Größe dieser Matrix ist durch den Farb- oder Grauwertumfang des Ausgangsbildes bestimmt. So sind beispielsweise bei einem 8-Bit quantisierten Grauwertbild mit 256 Grauwerten, die Dimensionen auf 256 festgelegt.

Verfügt ein betrachtetes Fenster bzw. ein analysiertes Unterbild über einen nur geringen Grauwertumfang, beispielsweise weil es kaum oder gar keine Fehlerstellen aufweist und sehr homogen ausgebildet ist, kommt es in der Auftrittswahrscheinlichkeits-Matrix zu einer starken Besetzung der Hauptdiagonalen der Matrix. Sind die Elemente aber weit von der Matrix entfernt, weist dies auf einen großen Grauwertunterschied zwischen den betrachteten Pixeln hin und möglicherweise auf eine Fehlerstelle in dem analysierten Fenster bzw. Unterbild.

Wird ein fester Abstand Δ und ein fester Winkel α zur Berechnung der Auftrittswahrscheinlichkeits-Matrix verwendet, ist diese in der Regel rotationsvariant. Für eine Segmentierung anhand von Texturen ist jedoch eine rotationsinvariante Matrix vorzuziehen, wenn so sichergestellt werden kann, dass eine Textur unabhängig von der Lage anhand der berechneten Parameter klassifiziert werden kann.

Zur Identifizierung einer Textureinheit einer Auftrittswahrscheinlichkeits-Matrix können stochastische Parameter einer solchen Matrix berechnet werden. Hierbei handelt es sich beispielsweise um Werte, wie Mittelwert oder die Varianz in Abhängigkeit der Richtung X oder Y der Matrix, Kontrast, Entropie, Homogenität, Energie, inverses Differenzmoment oder Korrelation.

Gemäß einer weiteren, sehr vorteilhaften Ausführungsform des vorliegenden erfindungsgemäßen Verfahrens hat ein Fenster bzw. ein Unterbild eine Größe von etwa zwischen 8x8 und 512x512 Pixeln. In diesem Sinne ist das Unterbild vorteilhafterweise rechteckig, insbesondere quadratisch ausgebildet. Grundsätzlich ist aber auch eine Abweichung von der Quadratform ohne weiteres möglich. Hierbei ist insbesondere auf die Rechenzeit zur Analyse der Fenster bzw. Unterbilder Rücksicht zu nehmen, denn je kleiner die Fenstergröße, desto größer ist die Anzahl von Bildausschnitten, zu denen jeweils eine Auftrittswahrscheinlichkeits-Matrix berechnet werden muss. Werden die Fenster jedoch zu groß gewählt, ist eine hinreichend sichere Fehlerstellendetektion nicht mehr möglich, da zum Beispiel die Fehlerkategorie Insektenstich (mit einer typischen Größe von einigen Millimetern) nicht mehr sicher detektierbar wäre (die dunkle Verfärbung eines Insektenstiches und der damit verbundene Grauwertunterschied wäre bei der geringen Fläche dieser Fehlerstelle in einem großen Unterbild ohne wesentlichen Einfluss auf die Varianz der Auftrittswahrscheinlichkeits-Matrix).

In der Praxis hat sich herausgestellt, dass es bei einer kleineren Fenstergröße als beispielsweise 8x8 Pixeln zu einer Vielzahl von Fehldetektionen kommt, wobei der Fenstergrößenbereich von über 512x512 Pixelnzwar kaum Fehldetektionen erzeugt, kleinere Fehler aber nicht sicher erkennt.

Gemäß der Erfindung soll das erfindungsgemäße Verfahren einen weiteren Verfahrensschritt aufweisen, nach welchem die als fehlerstellenhaltig erkannten Unterbilder in einem nachfolgenden Verfahrensschritt genauer analysiert werden. Hierzu können dann insbesondere weniger rechenaufwendige Verfahren, wie beispielsweise eine Untersuchung mit Hilfe von in der Beschreibungseinleitung genannten Diskontinuitätskriterien Einsatz finden. Diese Ausgestaltung der Erfindung ermöglicht eine noch genauere Analyse und dann auch Klassifizierung der aufgefundenen Fehlerstellen. Andererseits kann dieser Verfahrensschritt zur genaueren Analyse von Fehlern auch entfallen, insbesondere falls eine Klassifizierung oder Qualifizierung der Fehlerstelle nicht benötigt wird.

Vorteilhafterweise wird die zur automatischen Analyse der Unterbilder benötigte Rechenleistung (und somit auch die Rechenleistung zur Berechnung des oder der Schwellwerte und die Rechenleistung, welche zur Ermittlung des Gesamtbildes etc. benötigt wird) auf mehrere Prozessoren aufgeteilt. In diesem Sinne wurde erfindungsgemäß eine besonders hohe benötigte Rechenleistung für das vorliegende Verfahren festgestellt, da für jedes Unterbild eine Auftrittswahrscheinlichkeits-Matrix zu berechnen ist. Die Idee des vorliegenden erfindungsgemäßen Verfahrens ist insofern darin zu sehen, dass mehrere Prozessoren gleichzeitig die benötigte Rechenleistung bereitstellen. Hierzu kann beispielsweise eine Vorrichtung vorgesehen sein, welche einen Prozessor aufweist, der mehrere Kerne enthält. Alternativ kann auch eine Vorrichtung gewählt werden, welche mehrere separate Prozessoren aufweist (die jeweils mehrere Kerne aufweisen können).

Da es sich vorliegend um die Auswertung einer grafischen Aufnahme handelt, kann die Rechenleistung insbesondere auch von mehreren paralleln Grafikkarten bzw. deren Prozessoren bereitgestellt werden. Diese Idee soll an sich erfindungswesentlich sein und kann unabhängig von dem erfindungsgemäßen Verfahren auch für andere Verfahren zur automatischen Fehlerstellenerkennung bei beigeschlaffen Körpern eingesetzt werden, insbesondere bei solchen, bei denen keine Unterbilder erstellt werden oder keine automatische Analyse auf die beschriebene Art und Weise erfolgt.

Von der Erfindung soll auch eine Vorrichtung gemäß dem vorliegenden Patentanspruch 8 umfasst sein, welche im Wesentlichen die Ausführung eines der beschriebenen Verfahren ermöglicht. In diesem Sinne kann eine entsprechende Vorrichtung eine Aufnahmeeinrichtung, mit beispielweise drei CCD-Kameras aufweisen sowie eine Steuerung, welche beispielsweise die CCD-Kameras oder auch eine verlagerbare Auflageinheit für den biegeschlaffen Körper steuern kann. Die Steuerung kann zudem auch eine Recheneinheit umfassen oder mit dieser verbunden sein, welche die benötigte Rechenleistung zur Durchführung des oben beschriebenen Verfahrens bereitstellt.

Weitere Vorteile der vorliegenden Erfindung ergeben sich anhand gegebenenfalls nicht zitierter Unteransprüche sowie anhand der nachfolgenden Figurenbeschreibung.

Darin zeigen:
- Fig. 1: in einer sehr schematischen perspektivischen Ansicht eine Darstellung einer erfindungsgemäßen Vorrichtung bei aufgelegter Tierhaut unter Fortlassung einer optischen Haube,
- Fig. 2: in einer ebenfalls sehr schematischen Schnittansicht gemäß Ansichtspfeil II in Fig. 1 die in Fig. 1 dargestellte Vorrichtung unter Fortlassung der Recheneinheit und unter Darstellung einer optischen Haube,
- Fig. 3: in einer sehr schematischen Aufsicht oder Displayansicht eine Darstellung der Tierhaut gemäß der Fig. 1 und 2, wobei Fehlerstellen innerhalb der Tierhaut dargestellt sind sowie Projektionen von im Rahmen eines Nestingprozesses verteilter Zuschnittteile,
- Fig. 4: in einer sehr schematischen Diagrammansicht eine Auftrittswahrscheinlichkeits-Matrix, wie sie in Fig. 4c dargestellt ist, berechnet aus einem in Fig. 4b dargestellten Bereich einer in Fig. 4a dargestellten Tierhautaufnahme,
- Fig. 5: ein schematischer Ausschnitt aus einer Tierhaut, aufweisend eine Fehlerstelle Lochrand sowie eine Fehlerstelle Narbe, wobei das Ergebnis einer automatischen Analyse zur Fehlerstellenerkennung ohne Rückkopplung gezeigt ist,
- Fig. 6: eine Darstellung gemäß Fig. 5, wie sie sich ausgehend von Fig. 5 nach einem Rückkopplungsschritt hinsichtlich der erkannten Fehlerstellen darstellt.

Der folgenden Figurenbeschreibung sei vorausgestellt, dass gleiche oder vergleichbare Teile mit identischen Bezugszeichen versehen sein können, teilweise unter der Hinzufügung kleiner Buchstaben oder Apostrophs.

Alle Figuren sind lediglich schematisch zu verstehen.

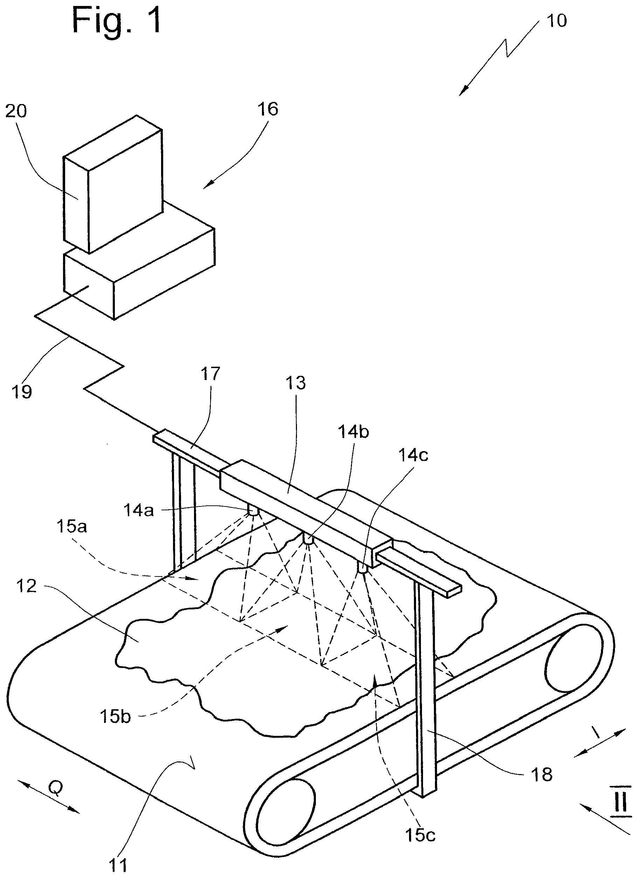

Fig. 1 zeigt zunächst eine erfindungsgemäße Vorrichtung 10 zur automatischen Fehlerstellenerkennung. Die Vorrichtung weist eine verlagerbare Auflagefläche 11 auf, die insbesondere als umlaufendes Förderband ausgebildet ist. Auf die Auflagefläche 11 ist eine hinsichtlich ihrer Fehlerstellen zu untersuchende Tierhaut 12 aufgelegt (wobei der Vollständigkeit halber darauf hingewiesen wird, dass Fehlerstellen der Tierhaut 12 in Fig. 1 aus Gründen der Übersichtlichkeit nicht zu erkennen sind).

Die auf die Auflagefläche 11 aufgelegte Tierhaut 12 kann von einer Aufnahmeeinrichtung 13 digitalisiert, insbesondere fotografiert, werden. Hierzu weist die Aufnahmeeinrichtung 13 drei nebeneinander, starr zueinander angeordnete CCD-Kameras 14 auf. Jede der CCD-Kameras 14a, 14b, 14c deckt hinsichtlich ihres Aufnahmefeldes 15 in Querrichtung Q zur Auflagefläche 11 einen gesonderten Bereich ab. Die Aufnahmefelder 15a, 15b, 15c ergänzen sich dabei derart, dass die gesamte Breite der Auflagefläche 11 von der Aufnahmeeinrichtung 13 erfasst wird. In Längsrichtung I ist die Auflagefläche 11 relativ zur Aufnahmeeinrichtung 13 verfahrbar, so dass die Tierhaut 12 unter der Aufnahmeinrichtung 13 automatisch hindurchbewegt werden kann. Alternativ kann hier selbstverständlich auch eine Zeilenkamera Verwendung finden. Eine Recheneinheit oder Steuerung 16, welche insbesondere als Computer ausgebildet sein kann oder von einem Computer umfasst sein kann oder mit einem Computer verbunden sein kann, kann dafür sorgen, dass die Tierhaut 12 derart unter der Aufnahmeeinrichtung 13 hindurchbewegt wird, dass die Aufnahmeeinrichtung 13 mit Hilfe mehrerer Aufnahmen die gesamte Oberfläche der Tierhaut 12 digitalisieren kann. Hierzu ist die Aufnahmeeinrichtung an einem Querbalken 17 einer Halterung 18 fest angeordnet. Alternativ ist eine Ausführungsform angedacht, bei welcher die Aufnahmeeinrichtung 13 vertikal oder auch horizontal (beispielsweise in Querrichtung Q oder in Längsrichtung I) verfahrbar sein kann, insbesondere mit Hilfe einer verfahrbaren und/oder höhenverstellbaren Halterung.

Fig. 1 zeigt zudem, dass die Aufnahmeeinrichtung 13 über eine Leitung 19 mit der Steuerung oder Recheneinheit 16 verbunden ist. Anstelle einer körperlichen Leitung 19 kann natürlich auch eine kabellose Verbindung vorgesehen sein. Auf dieses Weise können die von den CCD-Kameras 14 erstellten Aufnahmen an die Recheneinheit übersendet werden und beispielsweise in einem nächsten Schritt auf einem Display 20 der Recheneinheit 16 dargestellt werden zwecks optischer Kontrolle, ob tatsächlich die gesamte Tierhaut 12 digitalisiert wurde.

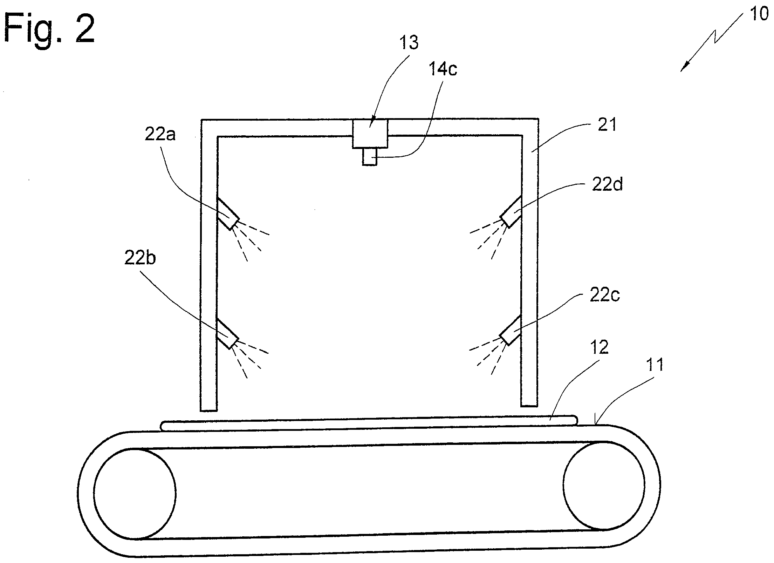

Fig. 2 verdeutlicht desweiteren, dass die Vorrichtung 10 auch eine in Fig. 1 aus Gründen der Übersichtlichkeit nicht dargestellte, sogenannte optische Haube 21 aufweisen kann. Bei dieser handelt es sich insbesondere um eine Abdeckung wesentlicher Bereiche der zu analysierenden Tierhaut 12 innerhalb derer die Aufnahmeeinrichtung 13 sowie die CCD-Kameras 14 angeordnet sind. Die optische Haube 21 ermöglicht hierbei eine Homogenisierung der Aufnahme, indem beispielsweise Tageslicht während der Aufnahme der Tierhaut 12 durch die Aufnahmeeinrichtung 13 von der Tierhaut 12 abgehalten wird. Anstelle einer natürlichen, inhomogenen Beleuchtung wird von der Haube 21 eine homogene Beleuchtung durch Leuchtelemente 22 bereitgestellt, welche ebenfalls innerhalb der Haube angeordnet sind. Auch die Beleuchtung durch die Leuchtelemente 22 kann von der in Fig. 1 dargestellten Rechen-, Steuer- und/oder Kontrolleinheit 16 geregelt werden.

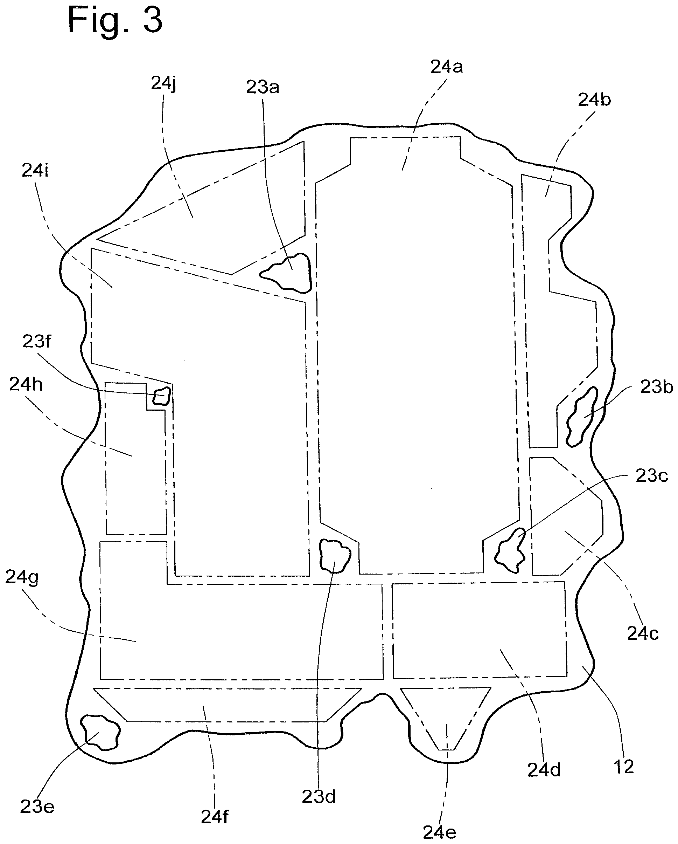

Sobald die Digitalisierung der Tierhaut 12 durch die Aufnahmeeinrichtung 13 abgeschlossen ist, kann die Recheneinheit 16 die einzelnen Aufnahmen insbesondere zu einem Gesamtbild der Tierhaut zusammensetzen und unter Verwendung des erfindungsgemäßen Verfahrens Fehlerstellen auf der Tierhaut 12 erkennen. Diesbezüglich zeigt Fig. 3 die Tierhaut 12, wie sie auf dem Bildschirm 20 gemäß Fig. 1 dargestellt ist. Insbesondere konnten in dem erfindungsgemäßen, von der Recheneinheit 16 ausgeführten Verfahren Fehlerstellen 23 innerhalb der Haut erkannt bzw. detektiert werden. Anhand der detektierten Fehlerstellen 23a, 23b, 23c, 23d, 23e, 23f kann die Recheneinheit einen herkömmlichen Nesting-Prozess durchführen und auszuschneidende Bearbeitungsstücke 24 derart auf der Haut verteilen, dass die erkannten Fehlerstellen 23 nicht innerhalb der auszuschneidenden Stücke 24 liegen.

Die Umrisse der verteilten bzw. platzierten Ausschnittstücke 24 können dann am Monitor 20, wie in Fig. 3 gezeigt, angedeutet und zwecks optischer Kontrolle dargestellt werden. Alternativ können die Konturen dieser Ausschnittstücke 24 auch durch eine in Fig. 1 nicht dargestellte Projektionseinheit (welche beispielsweise im Bereich oder in der Aufnahmeeinrichtung 13 angeordnet sein kann) zwecks optischer Kontrolle auf herkömmlich bekannte Art auf die Haut projiziert werden.

Wie die in Fig. 3 mit 23 bezeichneten Fehlerstellen von der in Fig. 1 dargestellten Vorrichtung 10 überhaupt erkannt werden, soll nun näher beschrieben werden:
So wird in einem anfänglichen Verfahrensschritt ein Eingangsbild bzw. eine Aufnahme zunächst in mehrere Unterbilder zerlegt. Bei dem Eingangsbild kann es sich beispielsweise um eine der in Fig. 1 mit 15 bezeichneten Aufnahmen handeln (beispielsweise um die Aufnahme 15b) welche in zahlreiche Fenster bzw. Unterbilder zerlegt wird.

Die Unterbilder haben typischerweise eine Größe zwischen 8x8 und 512x512 Pixeln.

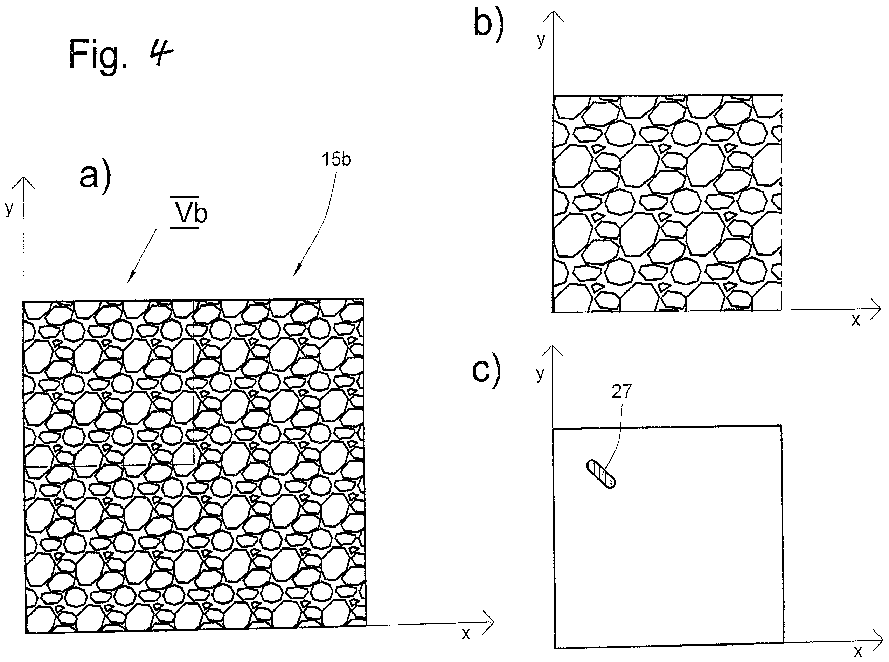

In einem weiteren Verfahrensschritt werden dann die sogenannten Auftrittswahrscheinlichkeits-Matrizen für jedes der Unterbilder ermittelt. Zur Definition einer Auftrittswahrscheinlichkeits-Matrix sei an dieser Stelle auf die Beschreibungseinleitung verwiesen sowie ergänzend auf Fig. 4, welche in drei Unterfiguren a), b) und c) das Wesen einer solchen Matrix verdeutlichen soll: So zeigt Fig. 4a zunächst einen Ausschnitt aus einer Tierhaut, bei der es sich beispielsweise um die Aufnahme 15b gemäß Fig. 1 handeln kann. Der Abschnitt 15b der Tierhaut 12 weist keine Fehler auf, sondern lediglich eine herkömmliche Textur, wie sie bei Tierhäuten üblich ist. Dementsprechend gestaltet sich die Oberfläche bzw. die Ansicht einer Tierhaut auch nicht vollständig einfarbig. Vielmehr sind natürliche Strukturen zu erkennen, welche in Fig. 4 lediglich aus Gründen der Übersichtlichkeit verstärkt kontrastiert dargestellt sind. Fig. 4b zeigt einen vergrößerten Ausschnitt aus der Aufnahme gemäß Fig. 4a und in diesem Sinne ein sogenanntes Fenster oder Unterbild. Dieses Unterbild ist jedoch wesentlich größer als die erfindungsgemäßen tatsächlichen Unterbilder und weist sehr viel mehr Pixel auf, da lediglich der grundsätzliche Charakter einer Auftrittswahrscheinlichkeits-Matrix verdeutlicht werden soll.

In diesem Sinne zeigt Fig. 4c die berechnete Matrix zu dem Unterbild gemäß Fig. 4b. Da das Unterbild gemäß Fig. 4b überhaupt keine Fehlerstellen zeigt, sondern lediglich eine homogene Tierhauttextur, weist Fig. 4b kaum Farb- bzw. Grauwertunterschiede auf und verfügt über einen lediglich geringen Grauwertumfang. Durch geringe Grauwertänderungen zwischen jeweils zwei betrachteten Pixeln im betrachteten Unterbild kommt es zu einer starken Besetzung der Hauptdiagonalen der Auftrittswahrscheinlichkeits-Matrix, wie Fig. 4c verdeutlicht. Die häufig auftretenden Grauwertkombinationen ballen sich in einem Bereich 27 entlang der (nicht dargestellten) Hauptdiagonalen der Matrix.

Zurück zu dem erfindungsgemäßen Verfahren: Wurde für jedes der eingeteilten Unterbilder der Aufnahme bzw. des Oberbildes 15b eine Auftrittswahrscheinlichkeits-Matrix errechnet, kann aus dieser Auftrittswahrscheinlichkeits-Matrix jeweils ein charakteristischer stochastischer Parameter berechnet werden.

Wurde für jedes der Unterbilder ein solcher Vergleichswert berechnet, kann in einem weiteren Verfahrensschritt eine Durchschnittsberechnung aller Vergleichswerte erfolgen und nachfolgend eine Fehlergrenze festgelegt werden, in Abhängigkeit des Durchschnitts der ermittelten Vergleichswerte aller Unterbilder. Die Fehlergrenze kann hierbei typischerweise ein Vielfaches des Durchschnittswertes aller Vergleichswerte betragen und kann je nach Anwednungsfall variieren.

Sofern ein einzelnes Unterbild dann einen Vergleichswert aufweist, der überhalb der ermittelten Fehlergrenze bzw. dem Schwellwert liegt, kann das Unterbild sodann als fehlerstellenhaltig klassifiziert werden. Anhand der als fehlerstellenhaltig ermittelten Unterbilder kann zu diesem Verfahrenszeitpunkt bereits eine Visualisierung der Aufnahme erfolgen, beispielsweise an dem in Fig. 1 dargestellten Display 20.

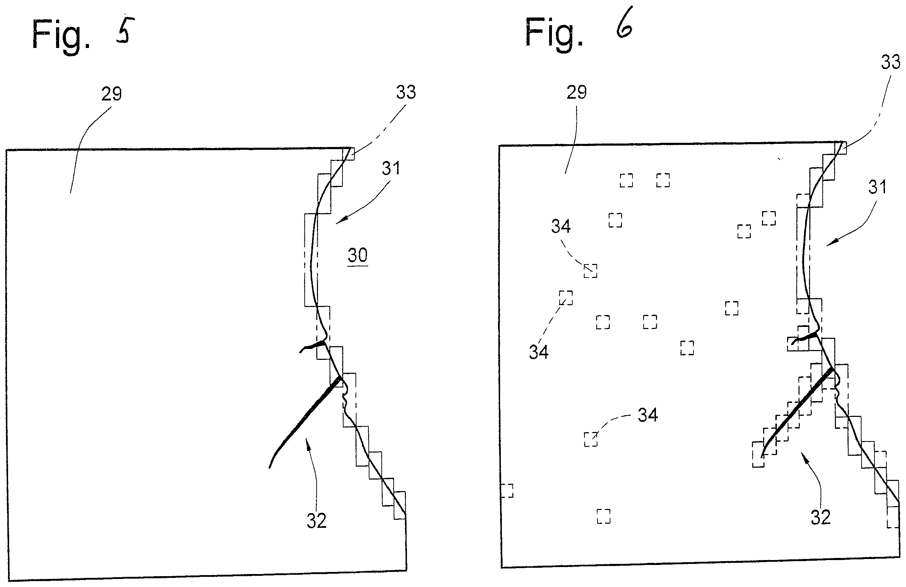

Für eine exemplarische, fehlerstellenhaltige Aufnahme 29 kann sich dann beispielsweise eine Visualisierung ergeben, wie sie Fig. 5 darstellt: Fig. 5 zeigt die Aufnahme 29 eines Teilbereichs einer Tierhaut mit zwei unterschiedlichen Fehlerstellen: So ist zunächst ein Loch 30 in der Tierhaut erkennbar, was sich in einem Teilloch der Aufnahme 29 derart äußert, dass hier eine Randfehlerstelle 31 der Tierhaut ersichtlich ist. Zudem ist ersichtlich, dass die Tierhaut im Bereich der Aufnahme 29 eine zweite Fehlerstelle aufweist, nämlich eine sich längs erstreckende Narbe 32.

Nach Durchführung eines erfindungsgemäßen Verfahrens kann die in Fig. 5 dargestellte Visualisierung dann beispielsweise auf die Randfehlerstelle 31 hinweisen, da die Unterbilder, durch welche sich die Randfehlerstelle 31 hindurcherstreckt, in der Darstellung sämtlich markiert hervorgehoben sind. Gemäß Fig. 5 sind die betroffenen Unterbilder durch einen bzw. mehrere zusammenhängende Kästen markiert. Ein exemplarisches Unterbild, welches als fehlerstellenhaltig erkannt wurde, ist beispielsweise mit der Bezugsziffer 33 versehen. Fehlerstellenhaltige Unterbilder, welche unmittelbar nebeneinander liegen, sind in Fig. 5 teilweise mit einem gemeinsamen Kasten umrandet.

Fig. 5 verdeutlicht dabei, dass die Randfehlerstelle 31 mit dem beschriebenen Verfahren äußerst gut und hinreichend zuverlässig erkannt wurde. Die Recheneinheit der erfindungsgemäßen Vorrichtung kann nunmehr Informationen abspeichern, entlang welcher Unterfenster sich ein Fehlerstelle, nämlich die Fehlerstelle 31, erstreckt.

Wie Fig. 5 weiter zu entnehmen ist, wurde jedoch noch nicht die Fehlerstelle 32, welche eine Narbe in der Tierhaut darstellt, automatisch entdeckt. Dies ist der Fall, da zwischen dem Loch 30 und dem Rest der Aufnahme 29 ein extrem großer, wenn auch in Fig. 5 der Übersichtlichkeit halber nicht dargestellter Kontrastunterschied besteht (in Fig. 5 wäre der Bereich des Loches 30 gegebenenfalls vollständig zu schwärzen, worauf lediglich aus Gründen der Übersichtlichkeit verzichtet wurde). Die Narbe 32 weist hingegen einen sehr viel geringeren Kontrastunterschied zum fehlerstellenfreien Bereich der Aufnahme 29 auf.

Aus diesem Grund wird vorteilhafterweise ein weiterer Verfahrensschritt eingeführt, welcher eine sogenannte Rückkopplung durchführt. Bei dieser Rückkopplung werden die in Fig. 5 als fehlerstellenhaft markierten Unterbilder, beispielsweise das Unterbild 33, bei einer erneuten Berechnung eines weiteren Durchschnittes der Vergleichswerte der restlichen Unterbilder ausgelassen. Mit anderen Worten wird nunmehr in dem Rückkopplungsschritt ein (Hilfs-) Durchschnittswert aller Vergleichswerte derjenigen Unterbilder ermittelt, welche bisher als fehlerstellenfrei erkannt wurden.

Nach Durchführung dieses Rückkopplungsschrittes 33 ergibt sich dann ein Bild wie es in Fig. 6 dargestellt ist, bei welchem neben der Randfehlerstelle 31 auch die Narbe 32 bzw. die dazugehörigen Unterbilder zuverlässig erkannt wurden. Bei Betrachtung von Fig. 67 fällt desweiteren auf, dass neben der Nabe 32 noch zahlreiche weitere Unterbilder 34 als fehlerstellenhaltig erkannt wurden.

Schließlich erfolgt in einem letzten Verfahrensschritt eine Visualisierung und Ausgabe beispielsweise an dem in Fig. 1 dargestellten Display 20, wobei die Visualisierung dann beispielsweise wie in Fig. 7 dargestellt aussehen kann. Die Visualisierung kann hierbei je nach Fehlertyp auch in unterschiedlichen Farben erfolgen: So kann beispielsweise ein in einem ersten Schritt erkannter Fehlerbereich eine erste Farbe aufweisen, ein Fehlerbereich, welcher in einem Rückkopplungsvorgang ermittelt worden ist, eine zweite Farbe.

Die ermittelten Fehlerstellen können dann im Rahmen eines bereits beschriebenen Nesting-Prozesses berücksichtigt werden, um so einen automatisches Schneiden der untersuchten Tierhaut zu ermöglichen.

## Patentansprüche

1. Verfahren zur automatischen Fehlerstellenerkennung bei biegeschlaffen Körpern (12), nämlich bei Tierhäuten, umfassend die Schritte
- Erstellen einer Aufnahme (15, 29) mindestens eines Teilbereichs des Körpers (12) durch eine, insbesondere mindestens eine CCD-Kamera (14) aufweisende, Aufnahmeeinrichtung (13),
- Unterteilung der Aufnahme (15, 29) in Unterbilder (33),
- automatische Analyse der Unterbilder durch Auswertung der Graustufenwerte oder Farbwerte eines Unterbildes (33) unter Berücksichtigung von Nachbarschaftsbeziehungen der einzelnen Bildpunkte des Unterbildes (33) untereinander,
- **dadurch gekennzeichnet, dass** die automatische Analyse der Unterbilder pro Unterbild (33) einen Vergleichswert ermittelt, welcher die Nachbarschaftsbeziehungen der einzelnen Bildpunkte des Unterbildes (33) untereinander berücksichtigt,
- dass der Vergleichswert eines Unterbildes (33) mit einem Schwellwert verglichen wird, zur Feststellung, ob das Unterbild eine Fehlerstelle (23, 31, 32) aufweist,
- dass der Schwellwert auf Basis der Vergleichswerte der Unterbilder (33) ermittelt wird,
- dass in einem Rückkopplungsschritt ein Hilfsschwellwert auf Basis der Vergleichswerte derjenigen Unterbilder ermittelt wird für welche keine Fehlerstelle festgestellt wurde, und
- dass Unterbilder (33), welche in der automatischen Analyse als fehlerstellenhaltig erkannt werden in einem nachfolgenden Verfahrensschritt hinsichtlich der genauen Position der Fehlerstelle im Unterbild (33), automatisch untersucht werden, unter Anwendung von Diskontinuitätskriterien oder Homogenitätskriterien.

2. Verfahren nach Anspruch 1, **dadurch gekennzeichnet, dass** der Schwellwert auf Basis der Vergleichswerte der Unterbilder (33) ermittelt wird, wozu der Durchschnitt aller Vergleichswerte berechnet wird.

3. Verfahren nach einem der vorhergehenden Ansprüche, **dadurch gekennzeichnet, dass** zur automatischen Analyse pro Unterbild (33) mindestens eine, insbesondere eine rotationsinvariante, Auftrittswahrscheinlichkeits-Matrix berechnet wird.

4. Verfahren nach einem der vorhergehenden Ansprüche, **dadurch gekennzeichnet, dass** pro Unterbild (33) ein stochastischer Parameter als Vergleichswert berechnet wird.

5. Verfahren nach einem der vorhergehenden Ansprüche, **dadurch gekennzeichnet, dass** die Unterbilder (33) jeweils eine Größe von zwischen 8x8 und 512x512 Pixeln aufweisen.

6. Verfahren nach einem der vorhergehenden Ansprüche, **dadurch gekennzeichnet, dass** die zur automatischen Analyse der Unterbilder (33) benötigte Rechenleistung auf mehrere Prozessoren, insbesondere mehrere Kernprozessoren oder mehrere Grafikkartenprozessoren, aufgeteilt wird.

7. Vorrichtung (10) zur automatischen Fehlerstellenerkennung bei biegeschlaffen Körpern (12), nämlich bei Tierhäuten, umfassend eine Aufnahmeeinrichtung (13) sowie eine Steuerung (16), und insbesondere eine Auflageeinheit (11) für den biegeschlaffen Körper (12), wobei die Vorrichtung (10) derart eingerichtet ist, dass sie unter Verwendung von Aufnahmeeinrichtung (13) und Steuerung (16) ein Verfahren nach einem der vorhergehenden Ansprüche ausführt.

8. Vorrichtung (10) nach Anspruch 7, wobei die Aufnahmeeinrichtung (13) mindestens eine CCD-Kamera (14) aufweist.

## Claims

1. Method for automatic detection of defects in flexible bodies (12), in particular in animal hides, comprising the steps of
- creating a photograph (15, 29) of at least one subregion of the body (12) by way of a photography device (13), in particular having at least one CCD camera (14),
- subdividing the photograph (15, 29) into sub-images (33),
- automatically analysing the sub-images by evaluating the greyscale values or colour values of a sub-image (33) while taking into account adjacency relationships between the individual image points of the sub-image (33),
- **characterised in that**, for each sub-image (33), the automatic analysis of the sub-images determines a comparison value which takes into account the adjacency relationships between the individual image points of the sub-image (33),
- **in that** the comparison value of a sub-image (33) is compared with a threshold to establish whether the sub-image has a defect (23, 31, 32),
- **in that** the threshold is determined on the basis of the comparison values of the sub-images (33),
- **in that**, in a feedback step, an auxiliary threshold is determined on the basis of the comparison values of those sub-images for which no defect has been found, and
- **in that** sub-images (33) which are detected as containing a defect in the automatic analysis are automatically studied in a subsequent method step for the exact position of the defect in the sub-image (33), using discontinuity criteria or homogeneity criteria.

2. Method according to claim 1, **characterised in that** the threshold is calculated on the basis of the comparison values of the sub-images (33), the average of all comparison values being calculated for this purpose.

3. Method according to any of the preceding claims, **characterised in that**, for the automatic analysis, at least one, in particular rotationally invariant, probability-of-occurrence matrix is calculated for each sub-image (33).

4. Method according to any of the preceding claims, **characterised in that** a stochastic parameter is calculated as a comparison value for each sub-image (33).

5. Method according to any of the preceding claims, **characterised in that** the sub-images (33) are each of a size of between 8x8 and 512×512 pixels.

6. Method according to any of the preceding claims, **characterised in that** the computational power required for the automatic analysis of the sub-images (33) is divided up among a plurality of processors, in particular a plurality of core processors or a plurality of graphics card processors.

7. Device (10) for automatic detection of defects in flexible bodies (12), in particular in animal hides, comprising a photography device (13) and a control system (16) and in particular a support unit (11) for the flexible bodies (12), the device (10) being set up so as to carry out a method according to any of the preceding claims using the photography device (13) and the control system (16).

8. Device (10) according to claim 7, wherein the photography device (13) has at least one CCD camera (14).

## Revendications

1. Procédé de détection automatique de défauts sur des corps non rigides (12), en particulier pour des peaux d'animaux, comprenant les étapes consistant à :
- créer un enregistrement (15, 29) au moins d'une partie du corps (12) par un dispositif d'enregistrement (13), présentant en particulier au moins une caméra CCD (14),
- diviser l'enregistrement (15, 29) en sous-images (33),
- analyser de manière automatique les sous-images, en évaluant les valeurs de niveau de gris ou les valeurs de couleur d'une sous-image (33) en tenant compte des relations de proximité entre les points individuels de l'image de la sous-image (33) les uns avec les autres,
- **caractérisé en ce que** l'analyse automatique des sous-images par sous-image (33) détermine une valeur de comparaison, laquelle tient compte des relations de proximité entre les points individuels de l'image de la sous-image (33) les uns avec les autres,
- **en ce que** la valeur de comparaison d'une sous-image (33) est comparée avec une valeur seuil, pour définir si la sous-image présente un défaut (23, 31, 32),
- **en ce que** la valeur seuil est déterminée sur la base des valeurs de comparaison des sous-images (33),
- **en ce que**, dans une étape de rétroaction, une valeur seuil auxiliaire est déterminée, sur la base des valeurs de comparaison des sous-images pour lesquelles aucun défaut n'a été défini, et,
- **en ce que** les sous-images (33), qui sont identifiées dans l'analyse automatique en tant que contenant des défauts, sont examinées automatiquement dans une étape ultérieure de procédé, en ce qui concerne la position exacte des défauts dans la sous-image (33), par application de critères de discontinuité ou de critères d'homogénéité.

2. Procédé selon la revendication 1, **caractérisé en ce que** la valeur seuil est déterminée sur la base des valeurs de comparaison des sous-images (33), où la moyenne de toutes les valeurs de comparaison est calculée.

3. Procédé selon l'une des précédentes revendications, **caractérisé en ce que**, pour l'analyse automatique par sous-image (33), au moins une matrice de probabilité d'occurrence, en particulier sans variation de rotation, est calculée.

4. Procédé selon l'une des précédentes revendications, **caractérisé en ce que**, par sous-image (33), un paramètre stochastique est calculé en tant que valeur de comparaison.

5. Procédé selon l'une des précédentes revendications, **caractérisé en ce que** les sous-images (33) présentent respectivement une taille comprise entre 8 x 8 et 512 x 512 pixels.

6. Procédé selon l'une des précédentes revendications, **caractérisé en ce que** la puissance de calcul nécessaire pour l'analyse automatique des sous-images (33) est répartie sur plusieurs processeurs, en particulier plusieurs processeurs noyaux ou plusieurs processeurs cartes graphiques.

7. Dispositif (10) de détection automatique de défauts sur des corps non rigides (12), en particulier des peaux d'animaux, comprenant un dispositif d'enregistrement (13) ainsi qu'une commande (16) et en particulier, une unité de support (11) pour les corps non rigides (12), le dispositif (10) étant conçu de telle sorte qu'il réalise en utilisant le dispositif d'enregistrement (13) et la commande (16) un procédé selon l'une des précédentes revendications.

8. Dispositif (10) selon la revendication 7, dans lequel le dispositif d'enregistrement (13) présente au moins une caméra CDD (14).
